# EUROPEAN PATENT APPLICATION

(11) **EP 1 081 608 A2**
(43) Date of publication of application: **07.03.2001**
(21) Application number: 00307454.9
(22) Date of filing: 30.08.2000
(51) Int. Cl.: G06F 17/30

(54) **Extracting user-customized subsets of data from a central database**

(30) Priority: 30.08.1999 US 385347
(71) Applicant: Point2 Internet Systems Inc., Saskatoon, Saskatchewan S7H 3K5 (CA)
(72) Inventor: Wright, Eron, Saskatchewan S7J 4E3 (CA); Willick, Barry, Saskatchewan S7J 3P8 (CA); Willick, Wendell, Saskatchewan S7H 4Y4 (CA)
(74) Representative: Jackson, Richard Eric

(57) **Abstract**

An apparatus, method and computer program is disclosed which allows for the extraction of user-customized subsets of data from a central database stored in a central server computer at a remote terminal computer. The user-customized data subset extracted is stored in a computer readable form, along with other corollary information such that the data contained in the subset can be viewed and used on the terminal or another computer in an offline state, without an active connection to said central database during viewing. The corollary information stored along with the extracted data subset can allow for the further personalized viewing of the extracted subset by more than one end user or viewer. Only the data selected by the authorized user of the central database is contained in the extracted subset.

## Description

The present invention relates to the extraction of customized data subset from a central database, of particular application in electronic commerce applications using data networks and/or offline viewing applications.

### BACKGROUND

As electronic commerce evolves, the customisation of the data viewing experience for users of exchange data repositories is a key element of improving customer service and enhancing service deliverables. Storage and distribution of data and business information from central databases is an established practice, which now evolves to provide better content delivery or better accessibility options.

Customisation of varying levels can be done, dependent upon the intended viewing audience of such information. For example, where a manufacturer was customizing an information view for a distributor of their products they may wish to include detailed assembly or technical instructions, whereas if the end view was intended for a general customer information inquiry, the technical information may not be required but they may wish to display cosmetic options such as paint colour or the like in its stead.

Customisation of the user interface of such information exchange databases can take on further complexity as well, resulting in output even more closely tailored to the needs of the user. For example, the data subset could be customized further by attaching static reseller-specific data to the records contained in the extracted subset. Such data might include a dealer name, logo, address or the like, as well as a currency conversion factor or exchange rate where resellers are in different countries and the items in the central database are valued in a base currency. This type of capability would allow the manufacturer to provide their reseller or resellers with a set of data in various formats which was customized for their specific use.

Another electronic commerce exchange which comes to mind in which the utility of such customisation techniques will be readily apparent would be that ofthe operation of a central database of real estate properties for sale through a local or regional multiple listing type service, where more than one company may list the same properties for sale. Various sets of reseller-specific data could refer to individual property records in the central database, and depending upon the reseller for whom a query was conducted on the central database, the output of that query could be customized.

The problem with customized interfaces such as this in the past had been that they required the actual coding and or storage of many different database queries which could be run against a central database containing all of the necessary product information upon demand by their specific user. Storage capacity requirements are substantial. As well, in the case of the storage of individual query results, which would only be updated from time to time, the data contained therein would always be somewhat out of date.

In expanding the utility of such central databases and the ability to customize the output therefrom, a key element is the ability to provide customers or users with copies of the users' required data from the central database for viewing or use in alternative environments. For example an equipment vendor who participates in an equipment data exchange system, either operated by themselves or a third party, might wish to distribute a copy of some or all of their content from the central database to potential customers or other departments within their company in a computer readable format for offline viewing or for other uses. By providing a customized data subset which could be viewed and used offline, the manufacturer would enable the distributor, for example, to have the ability to print out their own marketing brochures or other material from the offline data subset without requiring access to the network on which the central database is resident, as well as allowing for a decrease in the amount of standard printed material which needs to be produced and stocked by the manufacturer or reseller - this material is quickly dated, and when printed in commercially viable quantities is not as easily customized.

In the proper circumstances, a central database system could be employed, either internally or using a third party information exchange system, employing a network such as the Internet or the like, which would allow for the following functions:
a) Company X could enter all of the types of their grader and asphalt paver equipment into a central database, along with various types of tem specifications or inventory levels or the like associated therewith.
b) Sales representatives of Company X could download an up to date subset of information from the central database containing inventory and equipment specification material pertinent to each of the customers upon whom they will call before leaving the office for a week, into a laptop computer or onto a disk or the like for use at a customer site.
c) Distributor A could download an up to date subset of grader information, priced in Canadian funds, which could be viewed on the distributors own computer when disconnected from the central server computer. Distributor A's company information, contact info and the like could be displayed in association with each item in the extracted subset. Distributor A could use this subset of information to show equipment information to his own customers, to view equipment technical data or pricing material, or to print promotional materials customized for distribution by his company. Distributor A could download a new up to date subset of information at any time by accessing the central server computer and executing a new data extraction transaction.
d) Similarly, Distributor B could download an up to date subset of paver information, priced in U.S. funds, which could again be viewed on the distributors own computer when disconnected from the central server computer.
e) Company X could make a copy of their central database or a subset thereof and distribute it on a computer disk or the like, the software on which disk could ask for an identifier from the user thereof and the identifier would then result in the customisation of the viewing of the disk without requiring the production of multiple disks with different information.

Where the central databases were stored on a central server computer accessible to each interested party, all of these various central database extraction transactions could be carried out using a simple user interface whereby the entry of a valid key code or the like would result in the extraction and compilation of the proper information for download to the terminal for storage.

A system which allowed for the creation of a user-customized subset of data contained in a central database, with the data being up to date to the time of creation of such subset, would be well received in the industry. To make this type of a system user friendly such that a user of a third party information exchange service could create their own subset of data without the technical assistance of the exchange operator, would further improve the saleability of such a product.

### SUMMARY OF THE INVENTION

It is an object of the present invention to overcome disadvantages of the prior art.

The invention can be summarized as follows. An apparatus, method and computer program is disclosed which allows for the extraction of user-customized subsets of data from a central database stored in a central server computer at a remote terminal computer. The user-customized data subset extracted is stored in a computer readable form, along with other corollary information such that the data contained in the subset can be viewed and used on the terminal or another computer in an offline state, without an active connection to said central database during viewing. The corollary information stored along with the extracted data subset can allow for the further personalized viewing of the extracted subset by more than one end user or viewer. Only the data selected by the authorized user of the central database is contained in the extracted subset.

It is the object of the present invention to provide a method, computer program and apparatus for the extraction or creation of a user-customized subset of data from a central database stored on a central server computer, whereby the extracted subset would be stored on a remote terminal computer, or in such a fashion that the data could be used on a remote terminal computer without a live connection to the central server computer.

The invention, an information extraction apparatus for the creation of a subset of information from a central database in response to the submission of an extraction request by the user, accomplishes these objects comprising a central server computer having a central database for storing therein a plurality of item specifications, and a remote terminal computer operatively connected to communicate with said central server computer; whereby said central server computer has means for receiving an extraction request generated by a user at the remote terminal computer; means for searching the central database to generate an extracted subset of central database containing item specifications corresponding to the extraction request; means for formatting this extracted subset into a computer readable form and means for transmitting the extracted subset to the remote terminal computer for use in storage. The remote terminal computer has input means for generating the extraction request from the user and transmitting same to the central server computer, and storage means for storing the extracted subset in computer readable form, such that the extracted subset can be viewed by the user on a remote terminal computer.

The storage means of the remote terminal computer might be the internal hard disk of the remote terminal computer, a removable media drive whereby the extracted subset can be written to a removable computer readable media, or other means of storage.

The central server computer and the remote terminal computer might communicate by way of a computer network, a modem or otherwise. Where a computer network is the method of connection between these two machines, the network might be the intemet or an internal network.

The apparatus of the present invention might be further developed by adding means for validating an extraction request received from the remote terminal computer in advance of performing the extraction of the extracted subset from the central database.

The central database could store item specifications in various formats, including text, graphic, video and audio format.

The search means ofthe central server computer could generate the extracted subset by querying the central database for item specifications corresponding to the extraction request. The extraction request generated by the user might have extraction criteria associated therewith, including searchable selection criteria. The search means would then query the central database for item specifications corresponding to the selection criteria.

The extraction criteria included with the extraction request might also include alteration criteria to be applied to the item specifications corresponding to the extraction request. This would allow for the application or performance of various calculations or conversions on item specifications extracted from the central database for storage in the extracted subset, without affecting the data stored in the central database itself. Examples of alteration criteria which might be applied to various sorts of item specifications would be currency conversion factors or conversion of measurements between different scales.

The extraction criteria might also include static data to be included in the extracted subset. This would allow for the attachment of various user-specific data to the item specifications contained in the extracted subset, again without affecting the data stored in the central database.

In the case of the embodiment of the apparatus of the invention whereby extraction requests were validated against a set of valid extraction requests for security or other purposes, the valid extraction requests could be stored in the central server computer, either in the central database or in a separate database and the extraction criteria to be employed in the execution of each valid extraction request could also be stored, allowing for the simple recall of a preset extraction request and criteria.

It is further envisioned that the apparatus and method of the present invention could provide for another level of personalization insofar as it is possible to provide for various sets of personal viewing criteria to be associated with an extracted subset. In this case, the generation of the extracted subset would further comprise the generation or one or more viewing access identifiers, each said viewing access identifier having a set of viewing criteria associated therewith, and whereby the viewing access identifiers and associated viewing criteria are stored to the remote terminal computer along with the remainder of the extracted subset and upon viewing the extracted subset a user would provide an input to the viewing computer which would be validated against the viewing access identifiers stored along with the extracted subset, and upon validation of this viewing access identifier the viewing criteria associated with this viewing access identifier would be applied to the extracted subset as it was displayed. The viewing criteria, again, might include selection criteria, alteration criteria, other static data to be applied to various items in the extracted subset, or other changes to be made to the data contained in the already narrowed extracted subset before displaying this personalized information to the user.

In the case of this apparatus with the added viewing access identifier layer of authentication and personalization, the central database might also include valid viewing access identifiers and their associated viewing criteria, cross-referenced or corresponding to a valid extraction request, and which viewing access identifiers and associated viewing criteria corresponding to said extraction request would be extracted for storage along with the remainder of the extracted subset upon receipt and validation of a valid extraction request stored in the central server computer.

The means of formatting the extracted subset into computer readable form by the central server computer could compile the extracted subset into some type of a self-executing file, or alternatively could create browsable files containing the extracted subset. In the case of browsable files being created by the formatting means, the necessary browser software could also be stored along with the extracted subset, or alternatively the browsable files could be formatted such that browsing software already installed on the viewing computer, such as an internet browser software, could be used to view this information.

Another embodiment of the present invention might be an information extraction apparatus for the creation of a viewer-customisable subset of information from a central database in response to the submission of an extraction request by a user, said apparatus comprising a central server computer having a central database for storing therein a plurality of item specifications, a plurality of viewing access identifiers and one or more viewing criteria associated with each viewing access identifier, and a remote terminal computer operatively connected to communicate with said central server computer; said central server computer having means for receiving an extraction request generated by a user at said remote terminal computer; means for searching said database to generate an extracted subset of said database containing item specifications and viewing access identifiers with their associated viewing criteria which correspond to said extraction request; means of formatting said extracted subset into a computer readable format; and means for transmitting said extracted subset to the remote terminal computer. The remote terminal computer might in turn have input means for generating the extraction request from the user and transmitting same to the central server computer; and storage means for storing the extracted subset along with its viewing access identifiers and criteria, such that the extracted subset could be viewed by a user on a viewing computer. Upon viewing of the extracted subset, a user would be asked to provide an input to the viewing computer which would be validated against the viewing access identifiers stored along with the remainder of the extracted subset, and upon validation of the viewing access identifier the viewing criteria associated with that viewing access identifier would be applied to the extracted subset as it was displayed or otherwise used by the viewing user.

The invention also comprises a method of creating a subset of information from a central database using a central server computer having a central database stored therein containing a plurality of item specifications and a remote terminal computer operatively connected to communicate with the central server computer. The method itself comprises the steps of generating an extraction request at the remote terminal computer from a user; transmitting the extraction request to the central server computer; searching the central database to generate an extracted subset of the central database which contains item specifications corresponding to the extraction request; formatting the extracted subset into computer readable form; transmitting the extracted subset to the remote terminal computer; and storing the extracted subset in the remote terminal computer such that the extracted subset can be viewed by a user of a viewing computer.

The viewing computer might be the remote terminal computer, or might be the remote terminal computer, or might be another machine not in any way connected to the central server computer. In the case of a non-connected computer as the viewing computer, the extracted subset could be stored at the remote terminal computer on a removable computer readable media. Otherwise the remote terminal computer could store the extracted subset on its internal storage system.

The central server computer and the remote terminal computer could communicate via a computer network such as the internet.

The method could be further improved by including the step of validating the extraction request upon receipt thereof by the central server computer so that only valid extraction requests were executed against the central database.

The extracted subset would be generated by searching the database for item specifications corresponding to the extraction request. Where the extraction request includes extraction criteria, the extraction criteria might, in turn, be searchable selection criteria which would result in the generation of the extracted subset by searching the central database for item specifications corresponding to the selection criteria and extracting those specifications from the central database.

The extraction criteria might also include static data for attachment to the extracted subset, or alteration criteria which would result in the application of various conversions or calculations to certain item specifications within the extracted subset as they were stored. This type of an alteration criteria might include currency conversions, measurement conversions, or the like.

Where the extraction request is validated, the extraction criteria for valid extraction requests might be stored in the central server computer and upon receipt of a valid extraction request the central server computer could recall these extraction criteria to execute the pre-arranged extraction transaction.

The method might also include the generation of one or more viewing access identifiers for storage along with the extracted subset, each viewing access identifier having in turn a set of viewing criteria associated and stored therewith, whereby upon viewing of the extracted subset a user would provide an input to the viewing computer which would be validated against the viewing access identifiers stored along with the extracted subset, and upon receipt of a valid viewing access identifier, the viewing criteria associated with that viewing access identifier would be applied to the extracted subset as it was displayed or used by the viewing user.

The step of formatting the extracted subset in computer readable form might comprise compiling the extracted subset into a self-executing file, or alternatively creating browsable files containing the information from the extracted subset which could be browsed with browser software either stored along with the extracted subset or alternatively in a format such that they could be browsed using browsing software already installed on the viewing computer, such as an internet browser software.

The viewing criteria associated with various viewing access identifiers might in turn also include selection criteria, alteration criteria or static data for application to certain items in the extracted subset. This allows for a second layer of personalization of the output.

There is also disclosed a method of creating a viewer-customized subset of information from a central database in response to the submission of an extraction request by a user, using an apparatus comprising a central server computer having a central database for storing therein a plurality of item specifications and a plurality of viewing access identifiers and one or more viewing criteria associated with each viewing access identifier, a remote terminal computer operatively connected to communicate with said central server computer, and a remote viewing computer; the method itself comprising receiving an extraction request at the central server computer generated by a user at the remote terminal computer; searching the database and generating an extracted subset of said database containing item specifications and viewing access identifiers and their associated viewing criteria corresponding to the extraction request; formatting said extracted subset into computer readable format and transmitting said extracted subset to the remote terminal computer; storing said extracted subset in the remote terminal computer; making said extracted subset available to said remote viewing computer; accepting a user input viewing access identifier at the remote viewing computer from a user thereof; validating the viewing access identifier against the extracted subset of viewing access identifiers stored by the remote terminal computer; applying the viewing criteria associated with said viewing access identifier to the extracted subset of item specifications; and displaying the results of the application of the viewing criteria to the extracted subset of item specifications to the user at the remote viewing computer.

The preferred features of the invention might include alteration criteria such as currency exchange rates or measurement conversions, where certain item specifications may be currency amounts or measurements, and the application of the alteration criteria would consist of applying currency or measurement conversions to said item specifications.

As well, the preferred features of the invention would include, in terms of compiling the extracted subset into computer readable format, the creating of a self-executing file or the creation of browsable files. Browsable files might be accessible to programs already installed on a terminal computer, such as an Internet browser, or alternatively might be borwsable using a proprietary viewer which could be supplied.

The remote terminal computer and the remote viewing computer might be the same or different computers. Where the remote viewing computer is a different computer from the remote terminal computer, the extracted subset could be stored such that they could be accessed by the remote viewing computer, either by way of a removable media system, or alternatively the viewing computer and the remote terminal computer might be connected also by way of a modem, network or other connection.

There is also disclosed a computer program stored on a computer readable medium operative to control a central server computer for the creation of an extracted subset from a central database containing a plurality of item specifications, for storage in a remote terminal computer, which computer program, when executed by said central server computer, will perform the steps of accepting the input of an extraction request from a user of the remote terminal computer; extracting a subset of item specifications from the central database which correspond to said extraction request; formatting said extracted subset into computer readable format; and transmitting said extracted subset of item specifications to a remote terminal computer for storage therein, said remote terminal computer being operatively connected to said central server computer.

This program might further comprise the step of validating the extraction rcqucst upon receipt thereof by the central server computer. The database of item specifications might be adapted to store item specifications in at least one of: text, graphic, video or audio format.

The extraction request executed by this computer program might include searchable selection criteria whereby the creation of the extracted subset would comprise querying the database for item specifications corresponding to these selection criteria.

The program might further comprise the application of alteration criteria to the extracted subset.

This computer program might format the extracted subset into computer readable form by compiling the extracted subset into a self-executing file, or alternatively by creating browsable files containing the information from the extracted subset which could be browsed using browser software either stored along with the extracted subset, or alternatively the browsable files could be created in a format that could be viewed using browser software already installed on the computer, such as an internet browser.

Also disclosed is a computer program stored on a computer readable medium operative to control a central server computer for the creation of a viewer-customisable subset of information from a central database in response to the submission of an extraction request by a user, said central server computer being operatively connected to communicate with a remote terminal computer and said central server computer containing a database for storing therein a plurality of item specifications and a plurality of viewing access identifiers, and one or more viewing criteria associated with each viewing access identifier, said computer program, when operated to control the central server computer, accomplishing the steps of receiving an extraction request generated by a user at the remote terminal computer; searching the database to generate and extracted subset of said database containing item specifications and viewing access identifiers and their associated viewing criteria corresponding to said extraction request; and formatting said extracted subset into computer readable form and transmitting said extracted subset to a remote terminal computer for storage and access by a user of a viewing computer, wherein the computer readable files stored to the remote terminal computer will, when activated for viewing by a user of a viewing computer, prompt the user to enter a viewing access identifier, validate said viewing access identifier against the extracted subset of viewing access identifiers stored by the remote terminal computer and retrieve the viewing criteria associated therewith, and apply the viewing criteria associated with the entered viewing access identifier to the item specifications in the extracted subset when displaying this result to the user.

The above objects are met by the combination of the features of the main claim, and the subclaims disclose further advantageous embodiments of the invention. This summary of the invention does not necessarily describe all necessary features of the invention, but the invention may also reside in a sub-combination of these described features. The summary therefore present only an example and not a limitation of subject matter to exactly this combination of features.

### DESCRIPTION OF THE DRAWINGS:

While the invention is claimed in the concluding portions hereof, preferred embodiments are provided in the accompanying detailed description which may be best understood in conjunction with the accompanying diagrams where like parts in each of the several diagrams are labeled with like numbers, and where:
Figure 1 is system diagram of one embodiment of the apparatus of the present invention;
Figure 2 is a block diagram of one embodiment of the central server of the embodiment of Figure 1;
Figure 3 is a block diagram of one embodiment of the remote terminal of the embodiment of Figure 1; and
Figure 4 demonstrates the conduct of a data extraction transaction in the apparatus of the present invention.

### DETAILED DESCRIPTION OF THE ILLUSTRATED EMBODIMENTS:

The following description is of a preferred embodiment by way of example only and without limitation to the combination of features necessary for carrying the invention into effect. The present invention is directed to a system for the extraction of user-customized subset of data from a central database, in accordance with an extraction request received from a user via a remote terminal computer operatively connected to the central server computer, and then downloading this extracted data set from the central server computer to be stored in computer-readable form at the remote terminal computer.

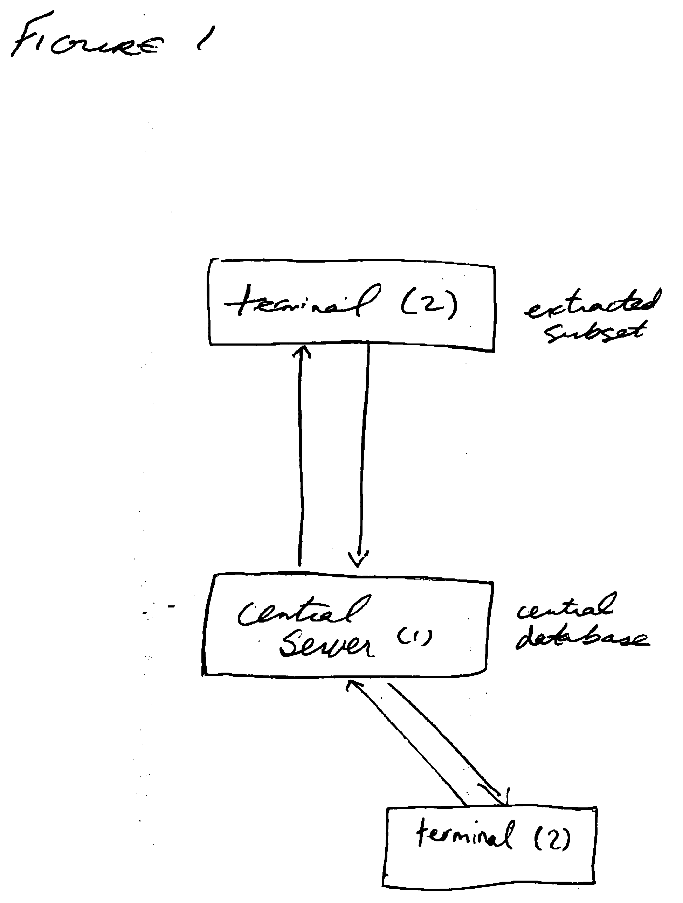

Figure 1 is an overall system block diagram of one preferred embodiment of the present invention. In this embodiment, a central server computer (1) is linked up to at least one terminal computer (2).

The link between the remote terminal computer (2) and the central server computer (1) does not have to be a physical link - it can, for example, be a link via modem, some type of radio connection or any other link. A data extraction transaction can be initiated from the remote terminal computer (2). The information which is required to process the data extraction transaction is contained in both the central server computer (1) and the remote terminal computer (2), insofar as the central database of item specifications is contained at the central server computer (1), but the actual extraction request is generated and sent from the remote terminal computer (2) to the central server computer (1). The remote terminal computer (2) send the extraction request to the central server computer (1), where the data subset is extracted and transmitted back to the remote terminal computer for storage.

The system depicted in Figure 1 may be embodied in hardware specifically provided to implement the present invention. Alternatively, the system may be implemented using the infrastructure that already exists in a particular company or for a particular user. It is particularly contemplated that the central server computer (1) and the remote terminal computer (2) might be a server and client computers connected via the Internet. The hardware and communications links of these systems might be used as an infrastructure for the practice of the present invention. Changes to the existing central server/server (1) to incorporate the subject invention may be accomplished in various ways, such as by reprogramming an existing file server or by adding an additional file server (with or without a CPU entirely dedicated to the receipt and processing of extraction requests upon the central database). Alternatively, the subject invention might be implemented using existing hardware entirely, making appropriate software updates.

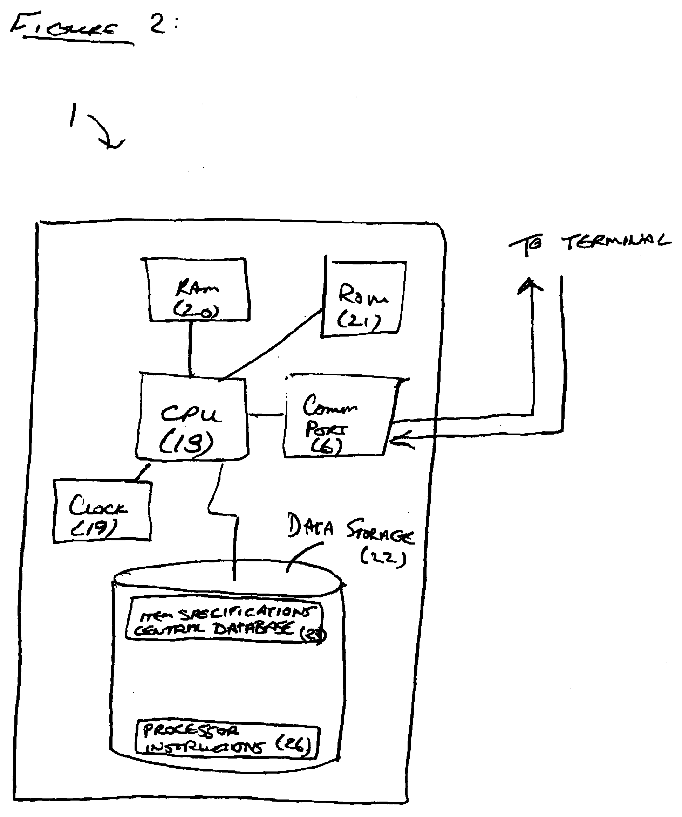

Figure 2 is a block diagram of a preferred central server computer (1) of the present invention. The central server computer (1) includes a CPU (18) which performs the processing functions of the server computer (1). It also comprises a memory system. The memory system might include read-only memory (21), random access memory (20) and disk or other storage space (22). The ROM (21) is used to store at least some of the program instructions that are to be executed by the CPU (18), such as portions of the operating system or software necessary to execute the transaction of the present invention. The RAM (20) is used for temporary storage of data and a clock circuit (19) provides a clock signal required by the CPU (18). The use of a CPU (18) in conjunction with ROM, RAM, disk space storage devices and the like and a clock circuit, is well known to those skilled in the art of CPU-based electronic circuit design. The central server computer as referred to herein means the combination of memory and storage devices used to retain data within the central server computer (1).

The central server computer (1) in this case also includes a communications port (6) which is used to communicate with devices outside of the server (1). In particular, the port (6) facilitates communication between the server (1) and a terminal (2). The port (6) might be a modem, network connection or some other method or apparatus along for the transmission and receipt of data by the server to and from an external device.

While the illustrated embodiment here uses a network connection as the communications port (6) to communicate with devices outside of the central server (1), including the terminal (2), it should be understood that other method of communication could be used instead of a network connection. These might include a modem, hardwired connections, radio communications, optical communications and the like, and it will be understood that all such methods of communication between the terminal (2) and the server (1) are contemplated within the scope of the present invention.

The central server computer (1), in its memory, includes an item specification database (23). The item specification database (23) contains a plurality of specifications which relate to one or more items. In addition, it includes transaction processor instructions (26) which can be read and executed by a CPU of the central server (1) where necessary to extract corresponding item specifications from the item specification database (23) upon receipt of an extraction request from the remote terminal computer (2) or to otherwise complete the execution of a data extraction transaction. Also optionally other unrelated databases might be included on the data storage system (22)of the central server computer, which may or may not be related to the information stored in the item specification database (23).

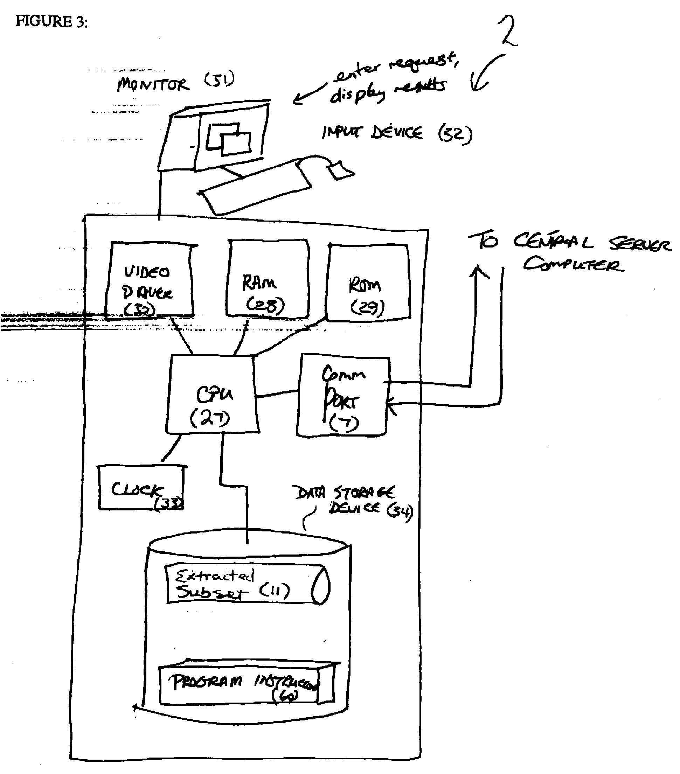

Figure 3 is a block diagram of a preferred remote terminal computer (2) of the present invention which can be located at a remote location from the central server computer (1). In the case of a distributed web application, for example, the terminal (2) might be located at a customer site, whereas the central server (1) would be located at the site of the provider or operator of the central database. In a web application any number of remote terminal computers (2) might be linked up to one central server (1).

Like the central server (1) described above, the remote terminal computer (2) includes a terminal CPU (27), and terminal memory, which again would include potentially ROM (29), RAM (28), clock circuit (33) and/or storage device (34) for data.

The terminal (2) also includes a communications port that facilitates communication between the terminal (2) and the central server (1). Of course, instead of the network connection depicted in the Figure, other ways of communicating can be used, as described above for the central server (1).

A standard computer running appropriate communication and interface software may be used as the terminal computer (2).

Dedicated software might be used to accomplish the objects of the present invention, or alternatively it is specifically contemplated that where the connection between the terminal (2) and the central server (1) is via the internet and the terminal (2) is equipped with an internet browser software package, the invention might be carried out, building on the already present features of the internet browser, as a browser plug-in or applet.

The terminal (2) may also include input means (32), such as a mouse, keyboard or combination thereof, in conjunction with a monitor (31). The input means (32) might interface directly with the CPU (27) as shown in the Figure, or alternatively an appropriate interface circuit (30) might be placed between the CPU (27) and the input means (32). The input means (32) is used by the user of the terminal (2) to generate the extraction request for transmission to the central server computer (1). The memory of the terminal (2) can store the extracted subset in computer readable form, when the extracted subset is generated by the central server on the basis of the extraction request and transmitted to the terminal (2) for such computer readable storage.

The extracted subset (11) would be stored in the memory area (34) of the terminal computer.

While the extracted subset (11) will be stored at the remote terminal (2) in the memory (34) of the terminal, it is stored in computer readable form such that the extracted subset (11) can be viewed by a user of a remote terminal computer, whether the remote terminal computer used for viewing is the terminal (2) or another computer not connected in any way to the central server (1). Where the remote terminal computer on which the viewing is going to take place is the terminal computer (2), the extracted subset (11) could simply be viewed on a monitor or the like or printed or otherwise output for viewing to the user of the terminal (2). Alternatively, where the remote terminal computer on which the viewing was to take place was not physically connected to the central server (1) and was not the terminal computer (2) used to generate the extracted subset (11), the extracted subset (11) from the central database (23) could be placed on a computer removable medium such as a diskette or CD ROM so that the extracted subset (11) could be used on a PC not connected to the central database in any way.

Between the operative connection of the central server (1) and the remote terminal (2), and the processor instructions resident in both processors thereof, the central server (1) is capable of receiving an extraction request generated by a user at the remote terminal (2), searching the central database (23) to generate an extracted subset (11) of the central database (23) containing item specifications corresponding to the extraction request, formatting this extracted subset (11) into a computer readable form and transmitting that extracted subset (11) to the remote terminal (2) where it will be stored in such a fashion that it can be viewed by a user of a remote terminal computer, which viewing remote terminal computer may or may not be the same remote terminal (2) which is used to receive and store the extracted subset (11).

The item specifications stored in the central database might be of various formats, including text, graphic, video, audio or other types of information, each of these various types and formats of item specifications being accessible from the central database upon supply of the proper extraction request from the remote terminal (2).

The search means of the central server computer (1) could query the central database (23) for item specifications corresponding to the extraction request supplied at the remote terminal (2).

The extraction request supplied at the remote terminal (2) might have various types of criteria associated therewith. For example, searchable selection criteria might be entered by the user at the remote terminal (2) and be included as a part of the extraction request. Extraction of item specifications from the central database (23) would then consist, at least in part, of searching and selecting item specifications which matched the searchable selection criteria forming a part of the extraction request.

The extraction criteria entered by the user as a part of the extraction request might also include alteration criteria which would be applied to the item specifications corresponding to the extraction request. Alteration criteria could be used to convert measurements, numbers or other types of information between various different formats based on the alteration criteria selected by the user. For example, one alteration criteria which is easily comprehensible is that of a currency exchange rate. A base currency might be used in the item specifications contained in the central database (23), but in a certain situation an extraction request might be supplied to the central server (1) which included alteration criteria requesting that the prices on the various item specifications be converted into a different national currency as a part of a creation of the extracted subset (11). Similarly, measurements might also be converted, for example between imperial and metric scales, whereby depending on the alteration criteria, if any, supplied with the extraction request, the measurements contained on the relevant selected item specifications might be converted between scales.

Another type of extraction criteria which could be included in an extraction request supplied from the remote terminal (2) the central server (1) would be static data. It might be desired by the user at the remote terminal (2) to add particular static data to each of the item specifications comprising the extracted subset (11). For example, a manufacturer who was creating an extracted subset (11) from their central parts database or product database might wish to provide their distributors each with a viewable extracted subset that the distributor could use with their customers wherein each item in the database had the distributor's name and address displayed on the screen or page along with the remainder of the item information, for example. It will be understood that various other types of static data would also be desirable to attach as a part of the extraction request and that any other such types of information would also be contemplated within the scope of the present invention. The extraction criteria as well, it will be understood, could comprise other types of extraction criteria beyond searchable selection criteria, alteration criteria or static data, and all such types of criteria or formula which could be supplied with an extraction request to the central database are contemplated within the scope of the present invention.

In an alternative embodiment of the apparatus of the present invention, the central server computer (1) would also include means for validating the extraction request upon receipt thereof from the remote terminal (2), and in advance of performing the extraction of the extracted subset (11) from the central database. This would allow for an additional security function as well as ensuring that only extraction requests within certain operational parameters were passed through to the central database for extraction.

In this embodiment, valid extraction requests could be stored in the central server computer (1) either in the central database (23) or in a separate database, against which user extraction requests could be validated. The extraction criteria to be employed in the execution of each extraction request could also be stored in the same place, such that when the user of the remote terminal (2) identifies the extraction request which they wish to execute, for example by a password or the like, the central server computer (1) could retrieve the necessary extraction criteria and the particulars of the extraction request from storage in the central server (1) for execution against the central database (23) and transmission of the resulting extracted subset (11) to the remote terminal (2).

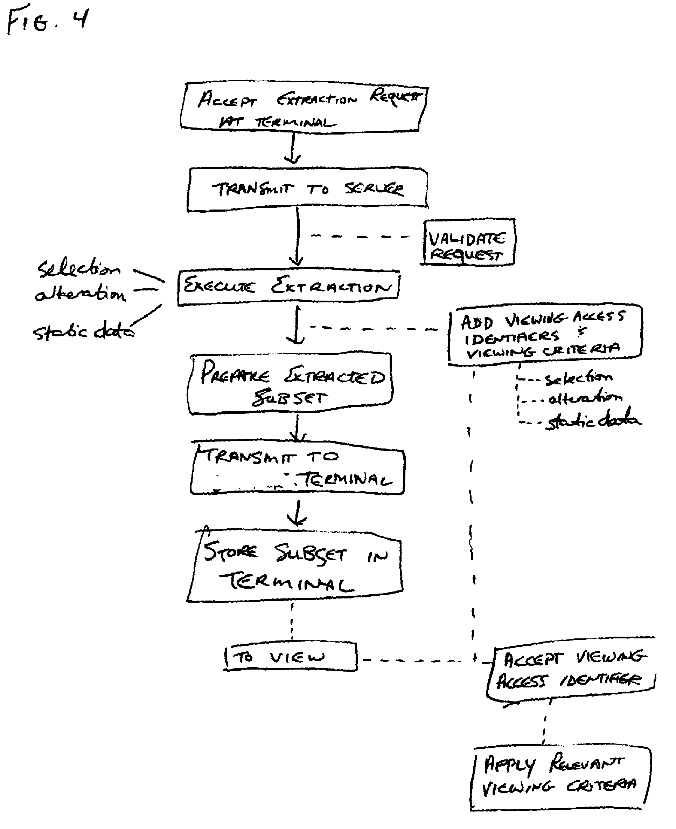

Figure 4 demonstrates the conduct of a data extraction transaction in the apparatus of the present invention. Item specifications within the central database are selected from the central database, comprising the extracted subset (11), and are reformatted or have other extraction criteria potentially applied thereto before transmission to the remote terminal (2) for storage in computer readable form.

In an alternative embodiment to that discussed so far, the generation of the extracted subset further comprises the generation of one or more viewing access identifiers, each. said viewing access identifier having a set of viewing criteria associated therewith and the viewing access identifiers and their associated viewing criteria being stored at the remote terminal computer along with the remainder of the extracted subset, whereby upon viewing of the extracted subset at a remote terminal computer, being the terminal (2) or otherwise, a user will provide an input to the viewing computer which will be validated against said viewing access identifiers and, upon validation of this viewing access identifier, the viewing criteria associated with that identifier will be applied to the extracted subset as it displayed. In order for this type of an extraction and an extracted subset (11) to take place, the viewing access identifiers and their viewing criteria would need to either be specified as a portion of the extraction request being submitted to the central database (23), or alternatively the viewing access identifiers and their associated criteria could be stored in the central server (1) along with the corresponding remaining extraction criteria for valid extraction requests, in an embodiment where the extraction request was validated by the central server (1) in advance of execution. Another alternative to supplying the viewing access identifiers or storing them for later recall from the central server, would be to allow the user in generating the extraction request to select the number and type of parameters that they wish to apply in terms of viewing criteria and then have the central server (1) automatically generate the actual viewing access identifiers and supply those back to the user along with the remainder of the extracted subset (11).

The addition of this layer of criteria and parameters to the stored extracted subset (11) will allow for, in effect, the execution of another extraction request against the extracted subset at the time of viewing.

Where the execution of the extraction request comes to formatting the extracted subset (11) into computer readable form, the computer readable form might involve compiling the extracted subset (11) into a self-executing file of some type, or alternatively it might involve compiling the extracted subset (11) into browsable files containing the necessary extracted subset information, which browsable files could be viewed using browser software stored along with the extracted subset or browser software which might already be present in the viewing computer. It is specifically contemplated that these browsable files might be viewed using an internet browser.

Also disclosed as a portion of the present invention is a method of creating a subset of information from a central database, using a central server computer having a central database stored therein containing a plurality of item specifications and a remote terminal computer operatively connected to communicate with said central server computer, said method comprising the steps of generating an extraction request at the remote terminal computer, transmitting the extraction request to the central server computer, searching the central database to generate an extracted subset of the central database containing item specifications corresponding to the extraction request, formatting this extracted subset into computer readable form and transmitting same to the remote terminal computer where it will be stored in the remote terminal computer such that the extracted subset can be viewed by a user of a viewing computer.

The viewing computer might be the remote terminal computer, in which case the method of storage of the extracted subset in the remote terminal computer might be on the internal disk system or in the physical memory of the remote terminal, or alternatively where the viewing computer is a different computer than the remote terminal computer the extracted subset might be stored on a removable media which could be shifted to the viewing computer.

As outlined above with respect to the apparatus of the present invention, the extracted subset could be generated by searching the central database for item specifications corresponding to extraction criteria supplied with the extraction request. The extraction criteria might include searchable selection criteria, whereby the extracted subset would be generated by searching the database for item specifications corresponding to the selection criteria, static data for inclusion in the extracted subset, or alteration criteria which could be applied to one or more item specification of the extracted subset to convert those data values to an alternative scale or format.

The extraction request might be validated upon receipt by the central server, such that only allowable extraction requests will be executed against the central database.

Where valid extraction requests are stored in the central server computer, against which user extraction requests are validated in advance of their execution, extraction criteria to be associated with each valid extraction request could also be stored in the central server computer, either in the central database or in a separate database, such that upon the receipt of a valid extraction request by the central server, the central server would also be able to retrieve the relevant extraction criteria from its own memory and execute the proper extraction transaction for formatting and transmission of the extracted subset to the remote terminal computer.

The method might also include the generation of one or more viewing access identifiers for storage with the extracted subset, where each viewing access identifier had a set of viewing criteria associated therewith and whereby upon viewing of the extracted subset a user would provide an input to the viewing computer which would be validated against the viewing access identifiers stored with the extracted subset and, upon validation of the input, the viewing criteria associated with the corresponding viewing access identifier would be applied to the extracted subset as it was displayed to the user.

It would be obvious that in certain cases the particular method of programming computers to carry out the method of the present invention would require certain programming conventions to be followed in order to integrate properly with other software operating conditions. For example, where the program of the present invention was a browser plug-in or applet, it may be necessary to add certain security programming, certificates or features to allow the program to interface with the local file systems on the remote computer and the central server. It will also be understood that all such requirements or modifications, insofar as the merely assist in the accomplishment of the overall goals of the present concept and invention are contemplated within the scope of the present invention.

### EXAMPLES:

The following few examples will demonstrate the operation and utility of the present invention, in the context of an equipment manufacturer and its dealings with various people in the process of manufacturing, selling or maintaining their equipment.

### Example A - Simple Network Extraction to a Network Computer:

The first example would have utility in the situation of a sales or service representative for the equipment manufacturer. For example, a service representative who worked only on a certain line of equipment produced by the manufacturer would like to keep an up-to-date parts list for bis line of equipment in his portable computer that he could use with him in the field when calling on clients or otherwise.

The manufacturer has a central database containing all of the service and parts information for all of the lines of equipment which they produce. The central database is contained on their main network file server, or elsewhere, and the representative would connect their laptop computer, for example, to the central server by way of a network connection, internet dial-up or otherwise.

The representative would enter their extraction request at their laptop computer, their laptop being the remote terminal computer. The extraction request would either be entered into a software designed to receive and transmit such request to the central server computer, or alternatively, in the situation of an internet browser interface, the extraction request might be entered in the browser and transmitted to the central server in this fashion.

For the purpose of demonstrating the most simple operation of the invention, the extraction request would simply stipulate that the extracted subset should contain all item specifications for a particular line of equipment. The central server computer would query the central database to retrieve the subset of the central database relating to that line of equipment, and would compile that extracted subset into a format which could be read or executed on the remote terminal computer. The extracted subset would be saved on the internal hard disk or otherwise in the memory of the laptop computer. The laptop computer could then be disconnected from the central server and the extracted subset of information could be accessed by the representative at any time. To update their information subset, the representative would simply need to reconnect to the network and execute the same extraction request again to download a new extracted subset to their computer.

### Example B - Preparation of a Product Listing for an Outside Distributor

In the situation of preparing a parts list or product listing for an outside distributor to use on its computer, the simple extraction transaction of Example A will be taken several steps further. At the remote terminal computer, the extraction request will be created which includes not only selection criteria, for example in this case outlining the types of products which should be included in the extracted subset, but also alteration criteria and other static data could be supplied with the extraction request. For example, while all of the information stored in the central database may be priced in a base currency, if the distributor is located outside of the country and the dealings with that distributor are taking place in an alternative currency, one alteration criteria which could be applied to the pricing information contained in the item specifications of the extracted subset would be to apply a currency conversion factor. As well, a mark-up factor or other calculation could be applied to pricing or other information containing in the item specifications of the extracted subset, such that the distributor would have a subset of information with retail pricing in it that they could use with their customers, for example. Static data might also be included. For example, the manufacturer may wish to set it up so that while the manufacturer's name appears on all the product information in the extracted subset, each screen viewed would also include, for example, the logo and/or name or address or other static information about the distributor so that it is easy for the customer to reach the proper person to make a purchase. Upon supply of this extraction request to the central server computer, the extracted subset would be created, the alteration criteria applied to the selected item specifications and the other static data added, and this extracted subset could be formatted in computer readable form and sent back to the remote terminal computer for storage on a removable media such as a CD ROM, which could then be removed and shipped to the distributor.

### Example C - Preparation of Repetitious Extraction Requests

In the case of either of the preceding examples, where the extraction request used to generate those extracted subsets is to be used on more than one occasion, it may be desirable to store the majority of the extraction request or the extraction criteria associated therewith on the central server computer, or in the remote terminal computer, such that they could be recalled at a later date. For example, if all of the extraction criteria associated with certain extraction requests were stored in the central server computer, at a later date the user of the remote terminal computer could simply input a request identifier, password or the like as their extraction request which would then be transmitted to the central server computer and, upon validation by the central server, the remainder of the parameters of the extraction request associated with that password would be recalled from the memory of the central server and that extraction request executed, the extracted subset resulting therefrom then being compiled and then transmitted back to the remote terminal computer.

### Example D - Extracting a Viewer-Customisable Subset from the Central Database

To take the concept of Example B one step further, it is possible to create an extracted subset from the central database which has a second layer of personalization available to it. For example, in formatting the extraction request to submit to the central server for creation of the extracted subset, the user could also specify one or more viewer access identifiers, or viewer passwords, which could be used or required from a viewer of the information upon any attempt to view the extracted subset. Each viewer access identifier could have its own set of viewing criteria associated therewith. For example, it would be possible to create a product catalogue for an entire line of equipment and then provide, for example, three separate viewing access identifiers. The first viewing access identifier might be a password to be used by the distributor itself. The only function ofthe first viewing access identifier to be used, for example by the distributor itself, might be as a password of sorts, whereby upon validation of that viewing access identifier all information contained within the extracted subset, and in unaltered form, was available for viewing. The second viewing access identifier might be for use by a certain customer of the distributor. Upon entry of their valid viewing access identifier, the viewing criteria associated with that viewing access identifier might include application of mark-up factors to the pricing listed in the extracted subset, currency conversions, measurement conversions, or the application of static data such as a particular sales representative's name, to all the information displayed. The third access identifier, listed by way of example to demonstrate the flexibility of the viewing access identifier layer of the personalization of the extracted subset, might be for another customer of the distributor, which customer might only be interested in certain products. As such, the viewing criteria associated with that viewing access identifier might include selection criteria whereby only certain item specifications from the extracted subset would be displayed, a different sales representative's name could be put on as static data, and/or any number of different pricing calculations or the like could be applied to alter the item specifications from the extracted subset as they are displayed to the user.

By placing this entire extracted subset on all of the associated viewing access identifiers and their corresponding viewing criteria in one place on a removable media, for example, the same CD ROM, or copies thereof, could be used by each of the distributor and their customers and they could each receive customized information on their computer screen.

In order to get an up-to-date set of this information, the user would need to simply execute a new extraction request, which might be saved on the central server in accordance with Example C above, and extract one new extracted subset would could in turn then be distributed to the various parties needing it.

Thus it can be seen that the invention accomplishes all of its stated objectives. The foregoing is considered as illustrative only of the principles of the invention. Further, since numerous changes and modifications will readily occur to those skilled in the art, it is not desired to limit the invention to the exact construction and operation shown and described, and accordingly, all such suitable changes or modifications in structure or operation which may be resorted to are intended to fall within the scope of the claimed invention.

## Claims

1. An information extraction apparatus for the creation of a subset of information from a central database in response to the submission of an extraction request by a user, said apparatus comprising a central server computer having a central database for storing therein a plurality of item specifications, and a remote terminal computer operatively connected to communicate with said central server computer;
a) said central server computer having means for receiving an extraction request generated by a user at said remote terminal computer; means for searching said central database to generate an extracted subset of said central database containing item specifications which correspond to said extraction request; means for formatting said extracted subset into a computer-readable form; and means for transmitting said extracted subset to said remote terminal computer; and
b) said remote terminal computer having input means for generating the extraction request from the user and transmitting same to the central server computer; and storage means for storing said extracted subset in computer readable form, such that said extracted subset can be viewed by the user on a remote terminal computer.

2. The apparatus of Claim 1 wherein the storage means of the remote terminal computer is a fixed disk.

3. The apparatus of Claim 1 wherein the storage means of the remote terminal computer is a removable media storage device.

4. The apparatus of Claim 1 wherein said central server computer further comprises means for validating the extraction request in advance of performing the extraction of the extracted subset from the central database.

5. The apparatus of Claim 1 wherein the central database is adapted to store item specifications in at least one of a text, graphic, video and audio format.

6. The apparatus of Claim 1 wherein the search means queries the central database for item specifications corresponding to the extraction request.

7. The apparatus of Claim 1 wherein the extraction request includes one or more of the following types of extraction criteria:
a) searchable selection criteria, wherein processing the extraction request the search means will query the central database for item specifications corresponding to the selection criteria;
b) alteration criteria which will be applied to the item specifications corresponding to the extraction request; or
c) static data to be included in the extracted subset.

8. The apparatus of Claim 7 wherein extraction criteria for valid extraction requests are stored in the central server computer, such extraction criteria being employed in execution of an extraction request upon receipt and validation of said associated extraction request by the central server computer.

9. The apparatus of Claim 1 wherein the generation of the extracted subset further comprises the generation of one or more viewing access identifiers, each said viewing access identifier having a set of viewing criteria associated therewith, said viewing access identifiers and associated viewing criteria being stored to the remote terminal computer along with the remainder of the extracted subset, whereby upon viewing of the extracted subset a user will provide an input to the viewing computer which will be validated against said viewing access identifiers, and upon validation of said viewing access identifier the viewing criteria associated with said viewing access identifier will be applied to the extracted subset as it is displayed.

10. The apparatus of Claim 9 wherein said central database also contains valid viewing access identifiers and their associated viewing criteria, which viewing access identifiers and associated viewing criteria corresponding to said extraction request can be extracted for storage along with the remainder of said extracted subset.

11. The apparatus of Claim 9 wherein the viewing criteria associated with a valid viewing access identifier include one or more of the following:
a) searchable viewing selection criteria, wherein the search means will query the extracted subset to identify item specifications corresponding to said viewing selection criteria;
b) viewing alteration criteria which are to be applied to one or more of the item specifications corresponding to the viewing criteria; and
c) static data to be displayed with the item specifications corresponding to the viewing criteria.

12. The apparatus of Claim 1 wherein said means of formatting the extracted subset into computer-readable form creates browsable files containing the extracted subset.

13. A method of creating a subset of information from a central database using a central server computer having a central database stored therein containing a plurality of item specifications, and a remote terminal computer operatively connected to communicate with said central server computer, said method comprising the steps of:
a) A user generating an extraction request at the remote terminal computer;
b) transmitting the extraction request to the central server computer,
c) searching the central database to generate an extracted subset of the central database which contains item specifications corresponding to the extraction request;
d) formatting the extracted subset into computer-readable form;
e) transmitting this extracted subset to the remote terminal computer; and
f) storing the extracted subset in the remote terminal computer such that the extracted subset can be viewed by a user of a viewing computer.

14. The method of Claim 13 wherein the extracted subset is stored at the remote terminal computer using a removable media storage device.

15. The method of Claim 13 further comprising the step of validating the extraction request upon receipt thereof by the central server computer.

16. The method of Claim 13 wherein the extracted subset is generated by searching the central database for item specifications corresponding to the extraction request.

17. The method of Claim 13 wherein said extraction request includes one or more of the following types of extraction criteria:
a) searchable selection criteria whereby the extracted subset is generated by searching the database for item specifications corresponding to said selection criteria;
b) alteration criteria, whereby the method further comprises altering one or more item specifications of the extracted subset by applying said alteration criteria to selected item specifications; and
c) static data for inclusion in the extracted subset.

18. The method of Claim 17 wherein the extraction criteria of valid extraction requests are stored in the central server computer and whereby said central server computer will create an extracted subset in accordance with said stored extraction criteria upon receipt of a valid extraction request.

19. The method of Claim 13 wherein the generation of the extracted subset further comprises generating one or more viewing access identifiers for storage therewith, each said viewing access identifier having a set of viewing criteria associated therewith, whereby upon viewing of the extracted subset a user will provide an input to the viewing computer which will be validated against said viewing access identifiers, and upon validation of said viewing access identifier the viewing criteria associated with said viewing access identifier will be applied to the extracted subset as it is displayed.

20. The method of Claim 19 further comprising the steps of:
a) accepting a user input of a viewing access identifier at a viewing computer having access to the extracted subset stored by the remote terminal computer;
b) validating said viewing access identifier against the viewing access identifiers stored with the extracted subset of item specifications;
c) applying the viewing criteria associated with said validated viewing access identifier to the extracted subset of item specifications; and
d) displaying the results of the application of the viewing criteria to the extracted subset of item specifications to the user of the viewing computer.

21. The method of Claim 19 wherein the viewing criteria includes one or more of the following:
a) viewing selection criteria, wherein the application of said viewing selection criteria to the extracted subset of item specifications results in the extraction of item specifications matching the selection criteria from said extracted subset;
b) matching criteria to be applied to selected item specifications from the extracted subset; or
c) static data to be included with the display of item specifications from the extracted subset.
